# EUROPEAN PATENT SPECIFICATION

(11) **EP 3 456 624 B1**
(45) Date of publication and mention of the grant of the patent: **01.01.2020**
(21) Application number: 17400053.9
(22) Date of filing: 14.09.2017
(51) Int. Cl.: B64C 1/00, B64C 1/12, B32B 3/28, B32B 3/30

(54) **A COMPOSITE SANDWICH PANEL WITH A SANDWICH AREA**
SANDWICHVERBUNDPLATTE MIT EINEM SANDWICHBEREICH
PANNEAU SANDWICH COMPOSITE COMPORTANT UNE ZONE EN SANDWICH

(43) Date of publication of application: 20.03.2019
(73) Proprietor: AIRBUS HELICOPTERS DEUTSCHLAND GmbH, 86609 Donauwörth (DE)
(72) Inventor: Fink, Axel, 86609 Donauwörth (DE); Einzmann, Constantin, 86159 Augsburg (DE)
(74) Representative: GPI & Associés

(56) References cited:
- US-A1- 2006 163 910
- US-A1- 2009 156 076

## Description

The invention is related to a composite sandwich panel with a first skin panel, a second skin panel, and a composite core that is arranged between the first skin panel and the second skin panel. The invention is further related to a rotary wing aircraft comprising such a composite sandwich panel.

Rotary wing aircrafts and, more particularly, helicopters are usually provided with airframes respectively fuselages that are in general characterized by pronounced discontinuities. This is a result of numerous openings, cut-outs, windows and hatches that are required e.g. for boarding, provision of emergency exits, visibility and quick accessibility to respective helicopter systems.

The airframes respectively fuselages are conventionally provided with respective outer lofts that are usually at least partly equipped with so-called load carrying shells, in particular in respective rear areas of the airframes and, in the case of medium size helicopters, for example, in intermediate transition structures to their respective tail booms. Such load carrying shells are usually composed of skins and stiffening members and implemented as metallic constructions. More specifically, the latter frequently features a semi-monocoque design with thin aluminum skins, stringers, and frames. An underlying stringer pitch is respectively chosen so as to match predetermined buckling resistance requirements, which typically allow the load carrying shells to buckle under a given percentage of limit service load. Exemplary semi-monocoque designs are e.g. described in the documents EP 3 036 299 A1 and WO 2007/009923A2.

The load carrying shells may also be implemented using suitable sandwich constructions, such as e.g. described in the documents CN 203 047 528 U, WO 2012/173159 A2 and US 2009/0156076 A1. However, the latter are generally characterized by large monocoque sandwich panels between frames and main longitudinal beams with no additional stringers and are designed to guarantee sufficient predefined margins against global buckling at predetermined ultimate loads. Such sandwich panels are generally covered over an entire respective sandwich area parameter, i.e. an area that is confined between the frames and longitudinal beams of the panel, with a sandwich arrangement, which is composed of an inner skin, a main load carrying outer skin, a respective sandwich core, and adhesive films bonding all components together.

Furthermore, the document US 2006/0163910 A1 describes a racing vehicle that has a plurality of molded body panels. Certain ones of the molded body panels are made with pre-impregnated filler reinforced fiberglass material. A first layer of pre-impregnated fiberglass material is formed to the panel shape. A second layer of pre-impregnated fiberglass material is formed in physical contact with the first layer of fiberglass material. A first filler layer is disposed between and in physical contact with the first and second layers of fiberglass material. A third layer of pre-impregnated fiberglass material is formed in physical contact with the second layer of fiberglass material. A second filler layer is disposed between and in physical contact with the second and third layers of fiberglass material. A foam core is disposed between and in physical contact with the second and third layers of fiberglass material. The molded body panel is connected to the racing vehicle with spring steel rods.

For low-to-moderately loaded sandwich panels and typical bay dimensions, i.e. dimensions of a region where a given sandwich panel is to be located, a conventional minimum sandwich configuration of an arrangement of a given sandwich panel usually exhibits, however, too large margins against global buckling, and even skin strength. Thus, the conventional minimum sandwich configuration is generally over-weighted and, hence, may beneficially be made the subject of suitable weight saving opportunities.

More specifically, this minimum sandwich configuration is typically defined by a minimum number of layers for the inner skin, the main load carrying outer skin, as well as the core. The minimum sandwich configuration is moreover driven amongst others by robustness, moisture ingress, repair, joining and manufacturing constraints. All these constraints lead to the above described over-weighting, so that conventional sandwich panels for rotary wing aircraft airframe applications are usually characterized by fewer mass efficiency than possible.

In order to improve an underlying mass efficiency, respectively applied sandwich panels can be implemented in composite design. In this case, a respective sandwich panel comprises a composite core, which is e.g. realized as a honeycomb core, as well as a working outer skin, a stabilizing inner skin, and film adhesive that is used to bond both skins to the honeycomb core. The skins are usually composed of a certain number of composite plies, in particular fabric plies, and the outer skin is conventionally provided with a greater number of plies than the inner skin. The composite core usually extends all over the sandwich panel and is surrounded at an outer perimeter by an outer framing structure. The outer framing structure is provided for being connected to longitudinal and transversal stiffeners, such as e.g. frames and stringers in a rotary wing aircraft. The sandwich area inside of the outer perimeter is typically also addressed as a bay. Thus, a conventional sandwich panel in composite design comprises a monolithic region within a respective attachment area defined by the outer framing structure, hence, allowing for efficient mechanical fastening between the composite sandwich panel and the outer framing structure. Typically, the attachment area requires some additional reinforcing plies in order to cope with a required joining strength and fastener installation requirements.

Furthermore, inserts are frequently introduced into the composite sandwich panel in order to allow for attachment of associated equipment units. However, the use of such inserts requires a minimum core thickness of a respective composite core at adequate strength.

It is also known to locally disturb an underlying composite core continuity by means of one or more local recesses, such as core edges that are reinforced by adequate core fillers, or by one or more ramps down to a local monolithic area in order to adapt a sandwich panel to a specific interface or in order to allow systems to pass through the composite sandwich panel, such as e.g. pipes, harnesses or the like. In these cases, respective discontinuities or disruptions of the sandwich area are, however, as small as possible and surrounded immediately as close as possible by the respective composite core in order to maintain an underlying homogenous and continuous sandwich arrangement.

Further requirements for design of composite sandwich panels are e.g. loading fluxes, in particular if the composite sandwich panels are used as side shells for fuselages of rotary wing aircrafts. Such loading fluxes are often considered as being moderate in magnitude in comparison to an underlying load capability of conventional continuously embodied composite sandwich panels that are arranged within respective bays of fuselages, i.e. airframes, even if an associated sandwich arrangement of the composite sandwich panels is only provided with a minimum required configuration. More specifically, tailoring of composite sandwich panels is usually simply focused on a local pad up of respective outer working skins in order to guarantee adequate margins with respect to sandwich strength requirements.

It is also known to aim exploitation of directional properties of monolithic laminated composite materials, e.g. by means of fiber steering, in order to improve either underlying strength properties of a given laminate or a respective buckling resistance or vibration behavior of a given monolithic skin. With such fiber steering technologies in combination with automatic fiber placement, curved fiber paths can be manufactured for providing variable properties over an entire spatial respectively areal extension of a monolithic skin, thus, enabling optimization of respected mechanical performances of a given composite sandwich panel.

Other configurations of composite sandwich panels are also known from the state of the art. For instance, the document US 6 187 411 B1 describes a stitch-reinforced sandwich panel with improved flatwise tensile strength. This sandwich panel, however, merely comprises regular arrangements of similar foam pieces which are not interconnected to each other and without forming any particular pattern.

However, conventional composite sandwich panels are usually also oversized with respect to actually expectable load conditions in operations. In other words, an underlying weight efficiency of such conventional composite sandwich panels is not optimized with respect to the actually expectable load conditions.

It is, therefore, the object of the present invention to provide a new composite sandwich panel that exhibits an improved weight efficiency whilst ensuring technological feasibility and economical suitability.

This object is solved by a composite sandwich panel with a first skin panel, a second skin panel, and a composite core that is arranged between the first skin panel and the second skin panel, the composite sandwich panel comprising the features of claim 1.

More specifically, according to the present invention the composite sandwich panel comprises a first skin panel, a second skin panel, and a composite core that is arranged between the first skin panel and the second skin panel, wherein the first skin panel comprises an accommodation in which the composite core is accommodated, and wherein the second skin panel is essentially flat. The composite core and the accommodation form a sandwich area that is heterogenous and comprises a plateau and at least one brace. The plateau merges via a predetermined number of ramps into a predefined number of composite core-free interstices. The plateau and the predefined number of composite core-free interstices define a nonuniform pattern in which the predefined number of composite core-free interstices comprises a first bending stiffness. The predefined number of composite core-free interstices comprises at least one inner interstice that is entirely framed by the composite core. At least one brace is provided adjacent to at least one of the predefined number of composite core-free interstices, wherein the plateau forms the at least one brace. The at least one brace comprises a second bending stiffness. The first bending stiffness is smaller than the second bending stiffness.

According to one aspect, the composite sandwich panel is adapted to be confined within a bay that is defined by associated framing members. Preferably, the inventive composite sandwich panel is discrete with a variable shape within a predetermined perimeter defined by the bay. In other words, the sandwich area that is part of the inventive composite sandwich panel is heterogenous and exhibits a nonuniform pattern which is not repetitive or periodically repeated, but instead a pattern with a varying shape.

As a result, this nonuniform pattern of the sandwich area, which is defined by an underlying shape of the composite core, is not maximized and adapted respectively extended to globally provided geometry boundaries, given by the framing, or local geometry boundaries, given by local adaptation to required recesses, as usual in conventional composite sandwich panels. Instead, a given spatial respectively areal extension of the sandwich area, i.e. the composite core, is rather merely adapted to predefined stiffness requirements of the inventive composite sandwich panel with respect to actually expectable loading conditions, as well as underlying stability and/or vibration requirements. In other words, the inventive composite sandwich panel is not configured to exhibit a maximum extension of the sandwich area within underlying bay parameters, which is common practice, but instead in order to minimize it at a maximum extent.

Advantageously, such a minimization of the spatial respectively areal extension of the sandwich area results in a significant reduction of an underlying weight of the inventive composite sandwich panel compared to a conventional composite sandwich panel. This significant weight reduction is achieved by reducing underlying overall dimensions of the respective composite core as such and, consequently, reducing required quantities of adhesive films required for bonding the composite core to the first and second skin panels.

More specifically, as a respective weight of the composite core and the respective adhesive films usually amount up to 35% of a total panel weight for a conventional composite sandwich panel in minimum configuration, reducing the spatial respectively areal extension of the composite core within the inventive composite sandwich panel e.g. by 50% would lead to a reduction of an overall panel weight of approximately 17%. This is particularly relevant for panel and loading configurations that are characterized by respectively large underlying margins of safety, as such large margins of safety generally result in a minimum sandwich configuration that is oversized for conventional low-to-moderately loaded bays and typical bay dimensions.

Such bays are usually essentially quadratic or rectangular. However, the heterogenous shape of the inventive sandwich area of the inventive composite sandwich panel preferably essentially defers from such a mere regular quadratic or rectangular bay geometry.

Preferably, a given spatial respectively aerial extension of the composite core of the inventive composite sandwich panel and, thus, the inventive sandwich area is variable over an associated bay surface. Thus, one or more underlying bending stiffnesses provided for the inventive composite sandwich panel can be tailored and placed at locations of the inventive composite sandwich panel where this is more efficient for a given intended structure or behaviour of the inventive composite sandwich panel.

It should be noted that this approach is similar to the well-known fibre steering technology that is used to trace respective in-plane fibre directions along main load paths in order to improve an overall behaviour of monolithic laminates. However, according to the present invention it is not an underlying tracing of fibre directions, but rather a tracing of a respectively selected core extension and shape which are the parameters used for improving an intended mechanical behaviour of the inventive composite sandwich panel in terms of bending stiffness.

More specifically, a specific bending stiffness of a composite sandwich panel cross section around its neutral axis is higher for a corrugated arrangement than for an arrangement with a conventional non-interrupted, homogenous sandwich area with constant thickness in sandwich cross section. In fact, a respective cross section of the corrugated arrangement advantageously exhibits alternating core-free monolithic and core-containing sandwich regions in contrast to the arrangement with the conventional non-interrupted, homogenous sandwich area that comprises a composite core having a constant height over the entire cross section. Consequently, the corrugated arrangement, which is more lightweight than the arrangement with the conventional non-interrupted, homogenous sandwich area exhibits a similar bending stiffness despite of the usually larger core height required by the corrugated arrangement. This is due to fewer amounts of composite core and adhesive films required for the corrugated arrangement, which is due to the core-free monolithic regions without composite core and where no adhesive film is required.

In other words, for any non-interrupted, homogenous sandwich arrangement a corresponding disruptive or corrugated, i.e. heterogenous arrangement can be defined with a larger specific bending stiffness, i.e. bending stiffness per mass unit. This is especially true for low-to-moderately loaded panels with a small total amount of skin layers and typical bay sizes.

Based on these considerations and by further considering that a composite sandwich panel is usually not solicitated in bending in a regular manner all over a respective bay where the composite sandwich panel is to be arranged, as the bending solicitation generally depends on application-specific geometrical constraints and possibly occurring load cases, the inventive composite sandwich panel is preferably provided with the inventive heterogenous sandwich area that exhibits a nonuniform pattern, i.e. that is based on an heterogenous, regular or irregular core lay-out with an essentially variable-shape extension, i.e. with braces, intersections, interstices, excrescences, closed contours, wave contours and so on. However, the inventive heterogenous sandwich area that exhibits the nonuniform pattern may in certain cases be defined such that the pattern is symmetrical.

In other words, the inventive composite sandwich panel is according to one aspect a discrete sandwich panel with a disruptive respectively heterogenous design that is characterized by a variable-shape sandwich area. This variable-shape sandwich area does not only include monolithic regions at respective borders of the inventive composite sandwich panel that serve as interface to an associated framing structure, but also central monolithic regions are provided, i.e. delimited respectively framed by the variable-shape composite core. The heterogenous sandwich area respectively the composite core therefore comprises a multiplicity of ramps where a plateau defined by the composite core merges into corresponding monolithic regions. The plateau is preferably provided with a height that is constant all over the composite core, but alternatively the height may also be variable.

Advantageously, due to the selected heterogenous design an underlying criticality of the inventive composite sandwich panel is reduced in comparison to conventional monocoque sandwich arrangements, for which local failures usually lead to complete failures of the entire panels. In the heterogenous design, the inventive composite sandwich panel advantageously offers at least some slight extent of redistribution of loads in case of occurring local damages. Furthermore, by applying the heterogenous design to the inventive composite sandwich panel, any impact of debonding failures on a respective panel performance is reduced compared to conventional non-interrupted sandwich designs. Moreover, the heterogenous design allows to reduce an occurring impact of temperature dependent transfer shear compliances of the composite core on an underlying panel stability compared to non-interrupted sandwich designs.

Furthermore, according to one aspect a respective geometrical lay-out of the composite core of the inventive composite sandwich panel and, thus, of the heterogenous sandwich area thereof is determined by means of topological and/or topographical optimization loops. Accordingly, respective bending stiffnesses of the inventive composite sandwich panel are efficiently tailored such that they are arranged along associated lines of maximum principal curvatures of a given deformation shape of a conventional non-interrupted sandwich panel.

Advantageously, an underlying maximum spatial respectively areal extension of monolithic regions provided by the sandwich area and the inventive composite sandwich panel in general are selected in order to match respective local stability requirements. These monolithic regions are preferably allowed to buckle above a predetermined limit load. Advantageously, such a buckling is not detrimental for underlying overall load carrying capabilities of the inventive composite sandwich panel.

Preferably, expected main paths for bending stiffnesses of the inventive composite sandwich panel are defined and the specific bending stiffness is preferably further optimized by adding unidirectional plies along main core trajectories. These unidirectional plies are preferably arranged at the plateau of the inventive heterogenous sandwich area, preferentially along at least one brace thereof.

According to one aspect, inserts may also be installed at the plateau of the inventive heterogenous sandwich area, preferentially at locations of the composite core. Thus, a wide variability of use can be achieved with the inventive composite sandwich panel.

According to a preferred embodiment, the first skin panel and the second skin panel form monolithic regions in the predefined number of composite core-free interstices. The first skin panel is attached to the second skin panel in the predefined number of composite core-free interstices.

According to a further preferred embodiment, the first skin panel and the second skin panel form a border monolithic frame that surrounds the sandwich area. The first skin panel is attached to the second skin panel at the border monolithic frame.

According to a further preferred embodiment, the border monolithic frame forms an outer panel border of the composite sandwich panel which is adapted for attachment to associated longitudinal stiffeners and transversal stiffeners.

According to a further preferred embodiment, the sandwich area covers a portion of the composite sandwich panel that is delimited by an outer perimeter with a covering ratio in a range from 40% to 65%.

According to a further preferred embodiment, the predefined number of composite core-free interstices comprises at least one interstice having a surface in a range of 0.008 to 0.025 m².

According to a further preferred embodiment, the predefined number of composite core-free interstices and at least one external core border of the sandwich area are independently oriented and traced with respect to a border monolithic frame that surrounds the sandwich area.

According to a further preferred embodiment, the plateau exhibits a continuous shape.

According to a further preferred embodiment, the plateau exhibits a discontinuous shape.

According to a further preferred embodiment, the plateau comprises a predetermined height.

According to a further preferred embodiment, the predetermined height varies over a spatial extension of the plateau.

According to a further preferred embodiment, the at least one brace is provided with a multiplicity of reinforcing plies, in particular reinforcing unidirectional plies, oriented along an extensional direction of the at least one brace.

According to a further preferred embodiment, the sandwich area comprises at least one corner nodal excrescence that is arranged in an associated corner of the composite sandwich panel, the at least one corner nodal excrescence being connected to the at least one brace.

The present invention further provides a rotary wing aircraft having a composite sandwich panel as described above.

Preferred embodiments of the invention are outlined by way of example in the following description with reference to the attached drawings. In these attached drawings, identical or identically functioning components and elements are labelled with identical reference numbers and characters and are, consequently, only described once in the following description.
- Figure 1 shows a lateral view of a helicopter with a fuselage that comprises a composite sandwich panel according to the invention,
- Figure 2 shows a perspective view of a portion of the fuselage of the helicopter of Figure 1,
- Figure 3 shows a perspective view of the composite sandwich panel of Figure 2 with a sandwich area according to the invention,
- Figure 4 shows a sectional view of the composite sandwich panel of Figure 3, seen along a cut line IV-IV of Figure 3,
- Figure 5 shows a top view of the composite sandwich panel of Figure 3 and Figure 4,
- Figure 6 shows an exploded view of the composite sandwich panel of Figure 3 to Figure 5,
- Figure 7 shows a top view of the composite sandwich panel of Figure 3 to Figure 6,
- Figure 8 shows a top view of the composite sandwich panel of Figure 3 to Figure 6 with a first alternative topology,
- Figure 9 shows a top view of the composite sandwich panel of Figure 3 to Figure 6 with a second alternative topology,
- Figure 10 shows a top view of the composite sandwich panel of Figure 3 to Figure 6 with a third alternative topology, and
- Figure 11 shows a top view of the composite sandwich panel of Figure 3 to Figure 7 with reinforcing unidirectional plies.

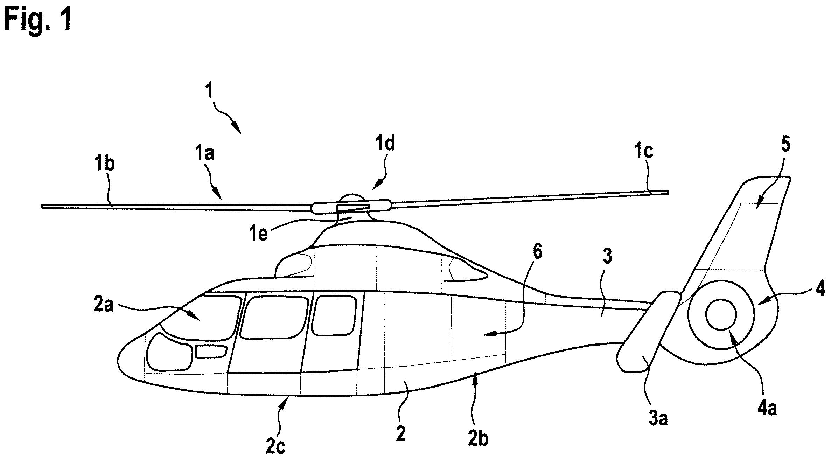

Figure 1 shows an aircraft 1 that is exemplarily illustrated as a rotary wing aircraft and, more particularly, as a helicopter. Thus, for purposes of simplicity and clarity, the aircraft 1 is hereinafter referred to as the "helicopter" 1.

Illustratively, the helicopter 1 comprises a fuselage 2 that forms an airframe of the helicopter 1. The fuselage 2 is connected to a suitable landing gear and exemplarily forms a cabin 2a, a rear fuselage 2b, and a center fuselage 2c. The rear fuselage 2b is connected to a tail boom 3.

Illustratively, the helicopter 1 further comprises at least one multi-blade main rotor 1a for providing lift and forward or backward thrust during operation. The at least one multi-blade main rotor 1a comprises a plurality of rotor blades 1b, 1c that are mounted at an associated rotor head 1d to a rotor shaft 1e, which rotates in operation of the helicopter 1 around an associated rotor axis.

By way of example, the helicopter 1 further comprises at least one preferentially shrouded counter-torque device 4 configured to provide counter-torque during operation, i.e. to counter the torque created by rotation of the at least one multi-blade main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a fin 5. Illustratively, the tail boom 3 is also provided with a suitable horizontal stabilizer 3a.

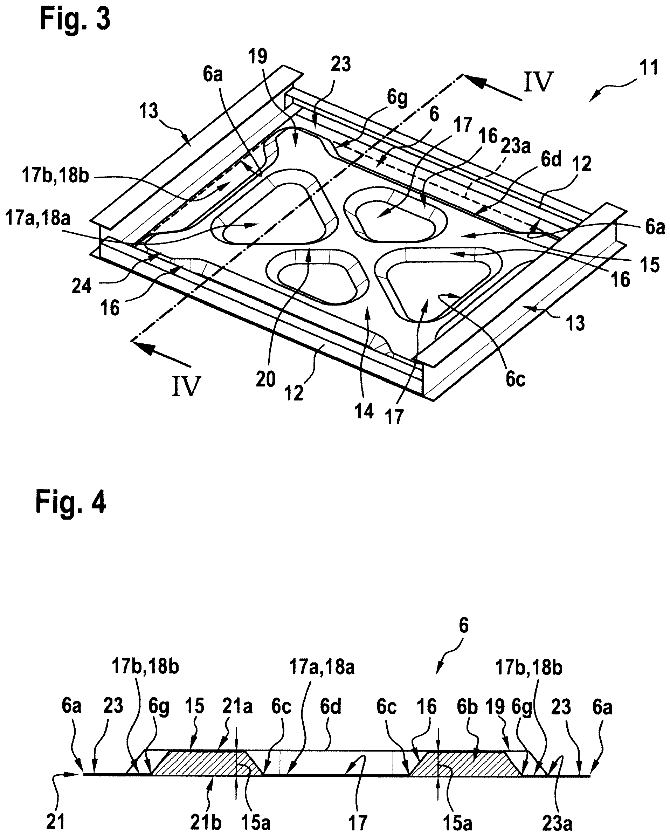

According to one aspect, the helicopter 1 and, more specifically, the fuselage 2 comprises at least one composite sandwich panel 6. The latter is exemplarily and representatively described in detail below with respect to Figure 3 to Figure 7.

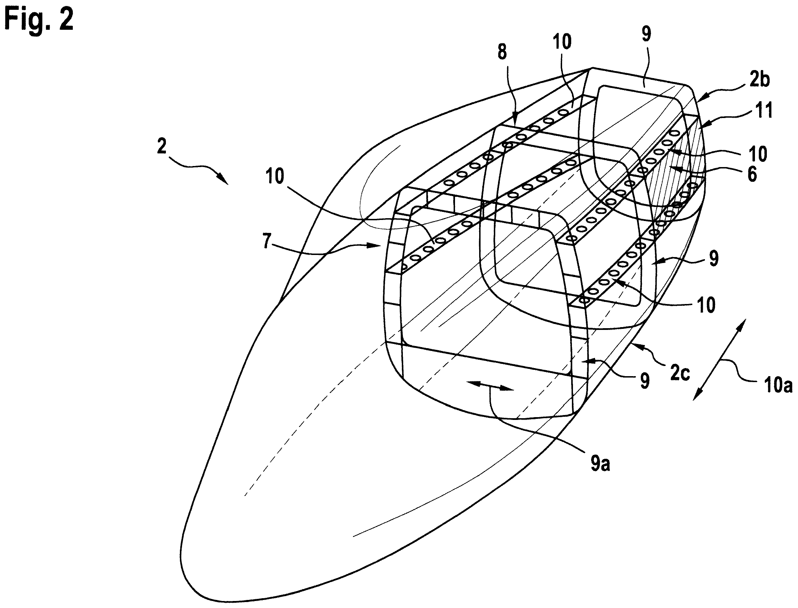

Figure 2 shows the fuselage 2 of Figure 1 for illustrating an exemplary configuration of the rear fuselage 2b and the center fuselage 2c in greater detail. According to one aspect, at least the center fuselage 2c, but preferentially also the rear fuselage 2b, is provided with a multiplicity of framing structural elements 7 that define a stiffening framework 8.

More specifically, the stiffening framework 8 preferably comprises a grid of frames 9 and longitudinal beams 10. The frames 9 exhibit transverse extensions that are preferably oriented along a transversal direction 9a of the fuselage 2 and, thus, of the helicopter 1 of Figure 1, i.e. a direction that is transverse to a forward flight direction of the helicopter 1 of Figure 1. By way of example, the frames 9 are illustrated having a closed, ring-shaped form that defines a frame structure. The longitudinal beams 10 exhibit longitudinal extensions that are preferably at least essentially oriented along a longitudinal direction 10a of fuselage 2 and, thus, of the helicopter 1 of Figure 1, i.e. a direction that is at least approximately in parallel to a forward flight direction of the helicopter 1 of Figure 1. Preferably, the longitudinal beams 10 connect the frames 9 to each other.

However, it should be noted that for clarity and simplicity of the drawings only four longitudinal beams 10 are shown. Nevertheless, the fuselage 2 may be provided with multiple longitudinal beams 10 and also with a greater number of frames 9 than illustrated. The number and orientation of frames 9 and longitudinal beams 10 may be adapted to a desired or required size of bay that should be provided by means of the frames 9 and longitudinal beams 10 in an application-specific manner. By way of example, a single bay 11 is highlighted that is encompassed by two of the frames 9 and two of the longitudinal beams 10. In other words, the term "bay" refers in the context of the present application to an area that is delimited by two frames 9 and two longitudinal beams 10, respectively. Thus, it should be clear that the fuselage 2 preferably comprises multiple bays 11, each of which is at least partly delimited by associated frames 9 and longitudinal beams 10.

According to one aspect, at least one of the bays, illustratively the bay 11, is provided with the composite sandwich panel 6 of Figure 3. The composite sandwich panel 6 is more generally described hereinafter with respect to Figure 3 to Figure 7.

Figure 3 shows the composite sandwich panel 6 of Figure 2, which is exemplarily arranged in the bay 11 of Figure 2. However, it should be noted that the composite sandwich panel 6 is not limited for use in the bay 11 of Figure 2, but may more generally be arranged between arbitrarily provided, associated longitudinal stiffeners 12 and transversal stiffeners 13, in particular also in other applications, e.g. in other fuselage constructions, such as airplanes, drones, rockets, automobiles or busses for example. Nevertheless, when being used with the helicopter 1 of Figure 1 respectively the fuselage 2 of Figure 1 and Figure 2, the longitudinal stiffeners 12 are preferably formed by the longitudinal beams 10 and the transversal stiffeners 13 are preferably formed by the frames 9 of Figure 2.

Preferably, the composite sandwich panel 6 comprises outer panel borders 6a. The latter are preferentially provided as interfaces to the longitudinal stiffeners 12 and the transversal stiffeners 13, i.e. they are provided for being attached or otherwise fixed to the longitudinal stiffeners 12 and the transversal stiffeners 13.

According to one aspect, the composite sandwich panel 6 comprises an accommodation 6d in which a composite core (6b in Figure 4) is accommodated. The accommodation 6d and the composite core (6b in Figure 4) that is accommodated therein preferably form a sandwich area 14.

The sandwich area 14 is preferably delimited as such by an overall extensional outer perimeter 23a and merges through this outer perimeter 23a into a border monolithic frame 23. This border monolithic frame 23 preferably forms the outer panel borders 6a of the composite sandwich panel 6, which are adapted for attachment to the longitudinal stiffeners 12 and the transversal stiffeners 13.

The outer perimeter 23a preferably represents a maximum possible, i.e. maximum functionally implementable extension of the sandwich area 14. This maximum possible, i.e. maximum functionally implementable extension of the sandwich area 14 preferably corresponds at least essentially to a usual extension of a respective sandwich area in a conventional, i.e. state-of-the-art composite sandwich panel.

According to one aspect, the sandwich area 14 comprises a plateau 15 that merges via a predetermined number of ramps 16 into a predefined number of interstices 17. Preferably, the interstices 17 are composite core-free regions, i.e. regions into which the composite core 6b of Figure 4 does not extend. Preferably, the sandwich area 14 further comprises at least one corner nodal excrescence 19. The corner nodal excrescence 19 preferably occupies a corner of the sandwich area 14 that directly merges into the border monolithic frame 23 via an associated one of the ramps 16.

However, it should be noted that describing the interstices 17 as composite core-free regions should not be considered as limiting the present invention only to such a configuration. Instead, various differing implementations may likewise be contemplated. For instance, instead of providing the interstices 17 as composite core-free regions, they might be provided as regions where other elements are provided instead of the composite core 6b of Figure 4, such as e.g. viscoelastic dampening elements.

According to one aspect, the interstices 17 can be distinguished into inner interstices 17a and outer interstices 17b. Preferably, the inner interstices 17a are interstices that are entirely framed by the composite core 6b of Figure 4, while the outer interstices 17b are interstices that merge directly into the border monolithic frame 23. Thus, the outer interstices 17b are arranged adjacent to the outer perimeter 23a of the sandwich area 14. More specifically, the outer interstices 17b preferably represent core-free regions between an external or outer core border 6g of the sandwich area 14 and the outer perimeter 23a. The external or outer core border 6g either delimits the outer or border interstices 17b from the border monolithic frame 23, or merges the corner nodal excrescences 19 into the border monolithic frame 23.

Furthermore, according to one aspect the sandwich area 14 comprises at least one brace 20. The at least one brace 20 is preferably arranged adjacent to at least one of the predefined number of composite core-free interstices 17 by means of the plateau 15. Preferably, the at least one brace 20 is provided in the form of a straight rib. Illustratively, multiple ribs are provided by the sandwich area 14, which are preferably interconnected. In the illustrated example of Figure 3, the ribs defining the braces 20 form an outer rectangular form and an X-shaped inner form.

According to one aspect, the predefined number of composite core-free interstices 17, i.e. the inner interstices 17a and the outer interstices 17b, comprise a first bending stiffness and, preferably, define associated inner and outer monolithic regions 18a, 18b, as described in more detail below with reference to Figure 4. The braces 20 preferably comprise a second bending stiffness. Preferentially, the first bending stiffness is smaller than the second bending stiffness.

It should be noted that the plateau 15 and the predefined number of composite core-free interstices 17 define a nonuniform pattern 24. More specifically, as can be seen from Figure 3, the plateau 15 does not exhibit a non-interrupted, homogenous shape, but a disruptive or interrupted shape, as the plateau 15 is interrupted by the interstices 17. Therefore, in the context of the present application the sandwich area 14 is determined as being heterogenous, i.e. as not comprising a non-interrupted or periodically or otherwise repetitive pattern. Nevertheless, the pattern may be symmetrical or mirror-inverted, as illustrated in Figure 3.

More specifically, the sandwich area 14 is preferably characterized by the interstices 17, which might be either the inner interstices 17a or the outer interstices 17b, and which are obtained by descending from the plateau 15 via the ramps 16 such that internal core borders 6c are created that delimit the inner interstices 17a, while the external or outer core borders 6g are created, which either delimit the outer or border interstices 17b from the border monolithic frame 23, or which merge the corner nodal excrescences 19 into the border monolithic frame 23, as described above.

It should be noted that the sandwich area 14 as illustrated was intentionally designed with regard to local and global bucking resistance against shear and compression loads. In one exemplary implementation, the bay 11 is provided with a size of approximately 0.4m² and the composite sandwich panel 6 is loadable by shear fluxes of up to 30N/mm to 50N/mm and merely provided with five composite fabric plies.

Figure 4 shows the composite sandwich panel 6 of Figure 3 with the border monolithic frame 23. According to one aspect, the composite sandwich panel 6 comprises skin panels 21 and, more specifically, a first skin panel 21a and a second skin panel 21b. Preferably, the first skin panel 21a is an inner skin panel which is with respect to the fuselage 2 of the helicopter 1 of Figure 1 and Figure 2 oriented towards an interior of the fuselage 2. The second skin panel 21b preferably represents an outer panel which is, with respect to the fuselage 2 of the helicopter 1 of Figure 1 and Figure 2, e.g. a panel that is oriented towards an exterior of the helicopter 1. Accordingly, the first skin panel 21a is referred to hereinafter as the "inner panel" and the second skin panel 21b is referred to hereinafter as the "outer panel".

According to one aspect, the inner panel 21a forms the accommodation 6d of Figure 3. The outer panel 21b is preferably essentially flat.

Preferably, a composite core 6b is accommodated in the accommodation 6d and, thus, arranged between the inner panel 21a and the outer panel 21b. The composite core 6b and the accommodation 6d preferably form the sandwich area 14 of Figure 3.

Figure 4 further illustrates the plateau 15 of Figure 3 that is created by means of the composite core 6b and the accommodation 6d, and that merges via the ramps 16 at the inner core borders 6c into the inner interstices 17a. The plateau further merges via the ramps 16 at the outer core borders 6g illustratively into the outer interstices 17b. The inner interstices 17a and the outer interstices 17b preferably form the monolithic regions 18a, 18b.

More specifically, the inner panel 21a and the outer panel 21b form the monolithic regions 18a, 18b in the inner interstices 17a and the outer interstices 17b, where the inner panel 21a and the outer panel 21b are attached to each other. By way of example, the inner panel 21a is bonded to the outer panel 21b in the monolithic regions 18a, 18b.

As can further be seen from Figure 4, the monolithic regions 18b are directly connected respectively directly merging into the border monolithic frame 23. Likewise, the corner nodal excrescences 19 merge into the border monolithic frame 23 via the ramps 16 at the outer core borders 6g.

According to one aspect, the inner panel 21a and the outer panel 21b also form the border monolithic frame 23 that surrounds the sandwich area 14. More specifically, the inner panel 21a is attached to the outer panel 21b at the border monolithic frame 23, e.g. bonded.

According to one aspect, the plateau 15 has a height 15a. Preferably, the height 15a is at least essentially constant over an aerial respectively spatial extension of the plateau 15. This is the case in the illustrated example of Figure 3 and Figure 4, where the plateau 15 and, more specifically, the braces 20 and the corner nodal excrescences 19 are all provided with an at least similar height, i.e. the height 15a of the plateau 15. However, the height 15a may also vary over the areal or spatial extension of the plateau 15. For instance, the braces 20 may be provided with a height that is reduced with respect to the height of the corner nodal excrescences 19 or vice versa. Still alternatively, different braces 20 may be provided with different heights, and so on.

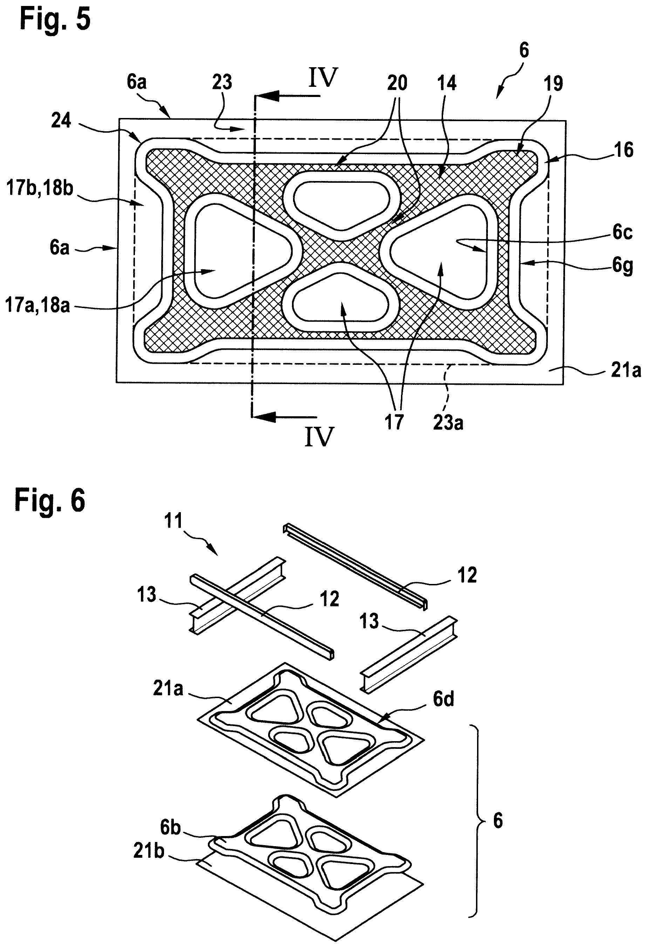

Figure 5 shows the composite sandwich panel 6 of Figure 3 and Figure 4 for further illustrating the sandwich area 14 and its outer perimeter 23a, as well as the border monolithic frame 23. Figure 5 also further illustrates the inner and outer interstices 17a, 17b that form the inner and outer monolithic regions 18a, 18b. The plateau 15 is illustratively emphasized by hatching.

According to one aspect, the sandwich area 14 covers a portion of the perimeter area of the composite sandwich panel 6 which is delimited by the outer perimeter 23a with a covering ratio in a range from 40% to 65%. The covering ratio is defined as the ratio between the heterogeneous sandwich area 14 and said perimeter area delimited by the outer perimeter 23a. More specifically, this covering ratio is preferably obtained by respectively selected dimensions of the composite core 6b of Figure 4 and the predefined number of composite core-free interstices 17. The latter preferably comprise at least one interstice that has a surface in a range of 0.008 to 0.025 m². Preferentially, at least one of the inner interstices 17a has a surface in this range.

Figure 5 also further illustrates an exemplary configuration of the sandwich area 14. In this exemplary configuration, each corner nodal excrescence 19 is connected to at least one other corner nodal excrescence 19 via at least one of the braces 20.

Figure 6 shows the composite sandwich panel 6 of Figure 3 to Figure 5 with the longitudinal stiffeners 12 and the transversal stiffeners 13 of Figure 3. Figure 6 further illustrates the inner panel 21a of Figure 4 that is provided with the accommodation 6d, as well as the composite core 6b, and the outer panel 21b.

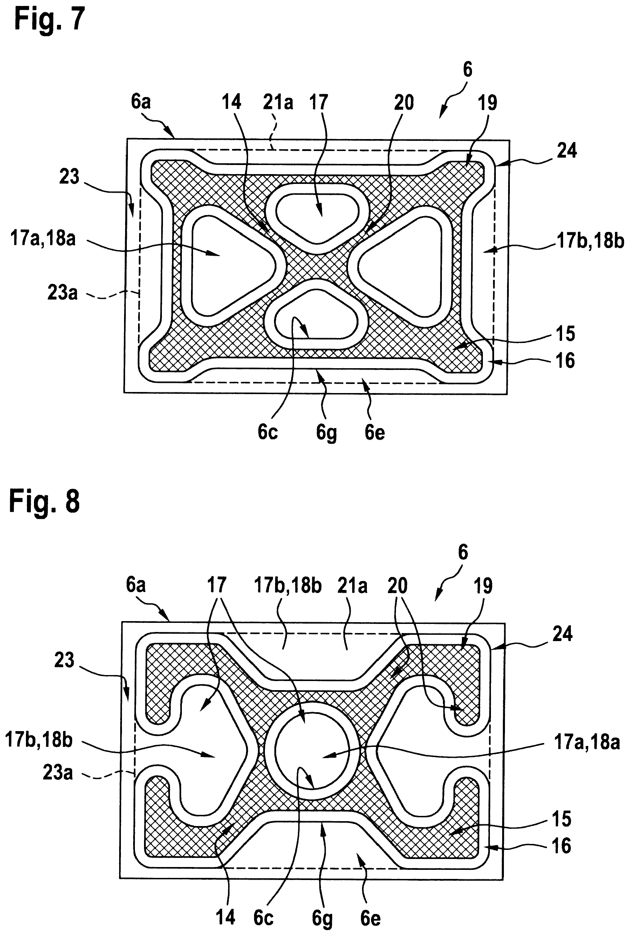

Figure 7 shows the composite sandwich panel 6 of Figure 3 to Figure 6, for further illustrating an exemplary configuration of the sandwich area 14 respectively the plateau 15. More specifically, this configuration is referred to as a continuous shape 6e.

In the context of the present application, this continuous shape 6e should be understood as a configuration where each one of the corner nodal excrescences 19 is connected to each other one of the corner nodal excrescences 19 via one or more of the braces 20. By way of example, the continuous shape 6e according to Figure 7 comprises four corner nodal excrescences 19 that are connected to each other by means of four outer braces 20 that form a rectangular frame with the corner nodal excrescences 19. Furthermore, the four corner nodal excrescences 19 are interconnected by means of four inner braces that are forming an X-shaped structure.

Figure 8 shows the composite sandwich panel 6 of Figure 3 to Figure 6 for illustrating a first alternative geometry of the continuous shape 6e of the sandwich area 14 respectively the plateau 15. According to Figure 8, the corner nodal excrescences 19 and the braces 20 are now merely interconnected in an essentially X-shaped structure that forms the first alternative geometry of the continuous shape 6e.

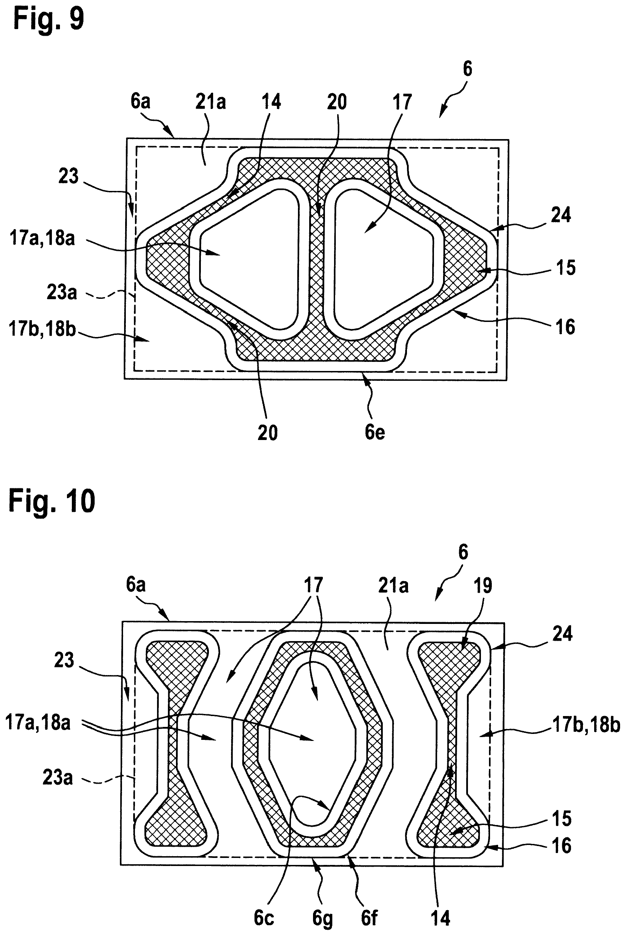

Figure 9 shows the composite sandwich panel 6 of Figure 3 to Figure 6 for illustrating a second alternative geometry of the continuous shape 6e of the sandwich area 14 respectively the plateau 15. According to Figure 9, the braces are now merely interconnected in an essentially ring-shaped structure that forms the second alternative geometry of the continuous shape 6e.

Figure 10 shows the composite sandwich panel 6 of Figure 3 to Figure 6, for further illustrating another exemplary configuration of the sandwich area 14 respectively the plateau 15. More specifically, this other exemplary configuration is referred to as a discontinuous shape 6f.

In the context of the present application, this discontinuous shape 6f should be understood as a configuration where according to one aspect the plateau 15 is disruptive. In other words, the plateau 15 is provided such that selected corner nodal excrescences 19 are not interconnected to all other corner nodal excrescences 19, but instead surrounded by monolithic regions, i.e. the inner and/or outer monolithic regions 18a, 18b and/or the border monolithic frame 23.

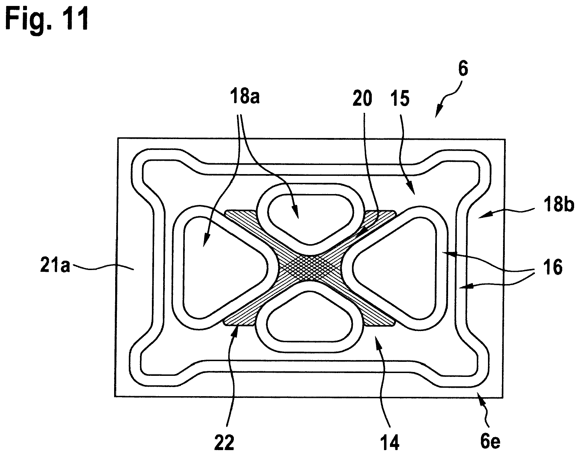

Figure 11 shows the composite sandwich panel 6 of to Figure 7 for further illustrating optional additional features thereof. More specifically, the sandwich area 14 of the composite sandwich panel 6 and, in particular, at least one of the braces 20 thereof, is now according to one aspect provided with a multiplicity of reinforcing plies 22, in particular reinforcing unidirectional plies. The latter are preferably oriented along an extensional direction of the respective brace(s) 20. In the illustrated example, the multiplicity of reinforcing plies 22 are crossing each other in a central portion of the sandwich area 14, thus, reinforcing this central portion.

It should be noted that modifications to the above described embodiments are within the common knowledge of the person skilled in the art and, thus, also considered as being part of the present invention. More specifically, it should be noted that the predefined number of composite core-free interstices 17 and the at least one outer core border 6g of the sandwich area 14 as described above are preferably independently oriented and traced with respect to the border monolithic frame 23 that surrounds the sandwich area 14 of the composite sandwich panel 6 as described above. In other words, various other configurations than the exemplary configurations illustrated in Figure 7 to Figure 10 are likewise contemplated, since the disruptive shape of the sandwich region is preferably a function of the bay dimensions and the type of loading.

Moreover, it should be noted that the present application relates to a composite sandwich panel with a composite core. More specifically, the inner panel 21a and the outer panel 21b are preferably implemented using composite material, in particular fiber reinforced polymers, such as e.g. carbon fiber reinforced polymers, glass fiber reinforced polymers and/or aramid fiber reinforced polymers. Likewise, the composite core is also implemented using a suitable composite material, such as e.g. foam or a suitable honeycomb core.

### Reference List

- 1: rotary wing aircraft
- 1a: multi-blade main rotor
- 1b, 1c: rotor blades
- 1d: rotor head
- 1e: rotor shaft
- 2: fuselage
- 2a: cabin
- 2b: rear fuselage
- 2c: center fuselage
- 3: tail boom
- 3a: horizontal stabilizer
- 4: counter-torque device
- 4a: tail rotor
- 5: fin
- 6: composite sandwich panel
- 6a: panel borders
- 6b: composite core
- 6c: internal core borders
- 6d: composite core accommodation
- 6e: continuous shape
- 6f: discontinuous shape
- 6g: external core borders
- 7: framing structural elements
- 8: stiffening framework
- 9: frames
- 9a: transversal direction
- 10: longitudinal beams
- 10a: longitudinal direction
- 11: bay
- 12: longitudinal stiffeners
- 13: transversal stiffeners
- 14: heterogenous sandwich area
- 15: plateau
- 15a: plateau height
- 16: ramps
- 17: core-free interstices
- 17a: inner interstice
- 17b: border interstice
- 18a: inner monolithic region
- 18b: border monolithic region
- 19: corner nodal excrescences
- 20: braces
- 21: skin panels
- 21a: inner skin panel
- 21b: outer skin panel
- 22: reinforcing plies
- 23: border monolithic frame
- 23a: sandwich area outer perimeter
- 24: nonuniform pattern

## Claims

1. A composite sandwich panel (6) with a first skin panel (21a), a second skin panel (21b), and a composite core (6b) that is arranged between the first skin panel (21a) and the second skin panel (21b), the first skin panel (21a) comprising an accommodation (6d) in which the composite core (6b) is accommodated, and the second skin panel (21b) being essentially flat, wherein the composite core (6b) and the accommodation (6d) form a sandwich area (14), **characterized in that** the sandwich area (14) is heterogenous and comprises:
a plateau (15) that merges via a predetermined number of ramps (16) into a predefined number of composite core-free interstices (17), wherein the plateau (15) and the predefined number of composite core-free interstices (17) define a nonuniform pattern (24) in which the predefined number of composite core-free interstices (17) comprises a first bending stiffness, and wherein the predefined number of composite core-free interstices (17) comprises at least one inner interstice (17a) that is entirely framed by the composite core (6b), and
at least one brace (20) that is provided adjacent to at least one of the predefined number of composite core-free interstices (17), wherein the plateau (15) forms the at least one brace (20), the at least one brace (20) comprising a second bending stiffness,
wherein the first bending stiffness is smaller than the second bending stiffness.

2. The composite sandwich panel (6) of claim 1, **characterized in that** the first skin panel (21a) and the second skin panel (21b) form monolithic regions (18a, 18b) in the predefined number of composite core-free interstices (17), the first skin panel (21a) being attached to the second skin panel (21b) in the predefined number of composite core-free interstices (17).

3. The composite sandwich panel (6) of claim 2,
**characterized in that** the first skin panel (21a) and the second skin panel (21b) form a border monolithic frame (23) that surrounds the sandwich area (14), the first skin panel (21a) being attached to the second skin panel (21b) at the border monolithic frame (23).

4. The composite sandwich panel (6) of claim 3,
**characterized in that** the border monolithic frame (23) forms an outer panel border (6a) of the composite sandwich panel (6) which is adapted for attachment to associated longitudinal stiffeners (12) and transversal stiffeners (13).

5. The composite sandwich panel (6) of claim 1,
**characterized in that** the sandwich area (14) covers a portion of the composite sandwich panel (6) that is delimited by an outer perimeter (23a) with a covering ratio in a range from 40% to 65%.

6. The composite sandwich panel (6) of claim 1,
**characterized in that** the predefined number of composite core-free interstices (17) comprises at least one interstice (17) having a surface in a range of 0.008 to 0.025m².

7. The composite sandwich panel (6) of claim 1,
**characterized in that** the predefined number of composite core-free interstices (17) and at least one external core border (6g) of the sandwich area (14) are independently oriented and traced with respect to a border monolithic frame (23) that surrounds the sandwich area (14).

8. The composite sandwich panel (6) of claim 1,
**characterized in that** the plateau (15) exhibits a continuous shape (6e).

9. The composite sandwich panel (6) of claim 1,
**characterized in that** the plateau (15) exhibits a discontinuous shape (6f).

10. The composite sandwich panel (6) of claim 1,
**characterized in that** the plateau (15) comprises a predetermined height (15a).

11. The composite sandwich panel (6) of claim 10,
**characterized in that** the predetermined height (15a) varies over a spatial extension of the plateau (15).

12. The composite sandwich panel (6) of claim 1,
**characterized in that** the at least one brace (20) is provided with a multiplicity of reinforcing plies, in particular reinforcing unidirectional plies, oriented along an extensional direction of the at least one brace (20).

13. The composite sandwich panel (6) of claim 1,
**characterized in that** the sandwich area (14) comprises at least one corner nodal excrescence (19) that is arranged in an associated corner of the composite sandwich panel (6), the at least one corner nodal excrescence (19) being connected to the at least one brace (20).

14. A rotary wing aircraft (1) with a composite sandwich panel (6) according to any one of the preceding claims.

## Patentansprüche

1. Verbundsandwichplatte (6) mit einer ersten Hautplatte (21a), einer zweiten Hautplatte (21b) und einem Verbundkern (6b), der zwischen der ersten Hautplatte (21a) und der zweiten Hautplatte (21b) angeordnet ist, wobei die erste Hautplatte (21a) eine Aufnahme (6d) umfasst, in der der Verbundkern (6b) untergebracht ist, und die zweite Hautplatte (21b) im Wesentlichen flach ist, wobei der Verbundkern (6b) und die Aufnahme (6d) einen Sandwichbereich (14) bilden, **dadurch gekennzeichnet, dass** der Sandwichbereich (14) heterogen ist und umfasst:
ein Plateau (15), das über eine vorgegebene Anzahl von Rampen (16) in eine vorgegebene Anzahl von verbundkernfreien Zwischenräumen (17) übergeht, wobei das Plateau (15) und die vorgegebene Anzahl von verbundkernfreien Zwischenräumen (17) ein ungleichmäßiges Muster (24) definieren, in dem die vorgegebene Anzahl von verbundkernfreien Zwischenräumen (17) eine erste Biegesteifigkeit aufweist, und wobei die vorgegebene Anzahl von verbundkernfreien Zwischenräumen (17) mindestens einen inneren Zwischen-raum (17a) umfasst, der vollständig von dem Verbundkern (6b) eingerahmt ist, und
mindestens eine Strebe (20), die angrenzend an mindestens einen der vorgegebenen Anzahl von verbundkernfreien Zwischenräumen (17) vorgesehen ist, wobei das Plateau (15) die mindestens eine Strebe (20) bildet, wobei die mindestens eine Strebe (20) eine zweite Biegesteifigkeit aufweist,
wobei die erste Biegesteifigkeit kleiner ist als die zweite Biegesteifigkeit.

2. Verbundsandwichplatte (6) nach Anspruch 1,
**dadurch gekennzeichnet, dass** in der vorgegebenen Anzahl von ver-bundkernfreien Zwischenräumen (17) die erste Hautplatte (21a) und die zweite Hautplatte (21b) monolithische Bereiche (18a, 18b) bilden, wobei in der vorgegebenen Anzahl von verbundkernfreien Zwischenräumen (17) die erste Hautplatte (21a) an der zweiten Hautplatte (21b) befestigt ist.

3. Verbundsandwichplatte (6) nach Anspruch 2,
**dadurch gekennzeichnet, dass** die erste Hautplatte (21a) und die zweite Hautplatte (21b) einen monolithischen Randrahmen (23) bilden, der den Sandwichbereich (14) umgibt, wobei in dem monolithischen Randrahmen (23) die erste Hautplatte (21a) an der zweiten Hautplatte (21b) befestigt ist.

4. Verbundsandwichplatte (6) nach Anspruch 3,
**dadurch gekennzeichnet, dass** der monolithische Randrahmen (23) einen äußeren Plattenrand (6a) der Verbund-Sandwichplatte (6) bildet, der zur Befestigung an zugeordneten Längsversteifungen (12) und Querversteifungen (13) eingerichtet ist.

5. Verbundsandwichplatte (6) nach Anspruch 1,
**dadurch gekennzeichnet, dass** der Sandwichbereich (14) einen durch einen äußeren Umfang (23a) begrenzten Abschnitt der Verbund-Sandwichplatte (6) mit einem Abdeckungsgrad in einem Bereich von 40% bis 65% abdeckt.

6. Verbundsandwichplatte (6) nach Anspruch 1,
**dadurch gekennzeichnet, dass** die vorgegebene Anzahl von verbund-kernfreien Zwischenräumen (17) mindestens einen Zwischenraum (17) mit einer Oberfläche in einem Bereich von 0,008 bis 0,025m2 umfasst.

7. Verbundsandwichplatte (6) nach Anspruch 1,
**dadurch gekennzeichnet, dass** die vorgegebene Anzahl von verbund-kernfreien Zwischenräumen (17) und mindestens eine äußere Kerngrenze (6g) des Sandwichbereichs (14) unabhängig voneinander ausgerichtet und in Bezug auf einen monolithischen Randrahmen (23), der den Sandwichbereich (14) umgibt, unabhängig voneinander ausgerichtet und geführt sind.

8. Verbundsandwichplatte (6) nach Anspruch 1,
**dadurch gekennzeichnet, dass** das Plateau (15) eine kontinuierliche Form (6e) aufweist.

9. Verbundsandwichplatte (6) nach Anspruch 1,
**dadurch gekennzeichnet, dass** das Plateau (15) eine diskontinuierliche Form (6f) aufweist.

10. Verbundsandwichplatte (6) nach Anspruch 1,
**dadurch gekennzeichnet, dass** das Plateau (15) eine vorgegebene Höhe (15a) aufweist.

11. Verbundsandwichplatte (6) nach Anspruch 10,
**dadurch gekennzeichnet, dass** die vorgegebene Höhe (15a) über eine räumliche Ausdehnung des Plateaus (15) variiert.

12. Verbundsandwichplatte (6) nach Anspruch 1,
**dadurch gekennzeichnet, dass** die mindestens eine Strebe (20) mit einer Mehrzahl von Verstärkungslagen, insbesondere unidirektionalen Verstär-kungslagen, die entlang einer Erstreckungsrichtung der mindestens einen Strebe (20) ausgerichtet sind, versehen ist.

13. Verbundsandwichplatte (6) nach Anspruch 1,
**dadurch gekennzeichnet, dass** der Sandwichbereich (14) mindestens ei-nen Eckknotenauswuchs (19) umfasst, der in einer zugeordneten Ecke der Verbund-Sandwichplatte (6) angeordnet ist, wobei der mindestens eine Eccknotenauswuchs (19) mit der mindestens einen Strebe (20) verbunden ist.

14. Drehflügelflugzeug (1) mit einer Verbund-Sandwichplatte (6) nach einem der vorstehenden Ansprüche..

## Revendications

1. Panneau sandwich composite (6) avec un premier panneau de peau (21a), un second panneau de peau (21b), et un noyau composite (6b) qui est agencé entre le premier panneau de peau (21a) et le second panneau de peau (21b), le premier panneau de peau (21a) comprenant un logement (6d) dans lequel le noyau composite (6b) est logé, et le second panneau de peau (21b) étant essentiellement plat, dans lequel le noyau composite (6b) et le logement (6d) forment une zone sandwich (14), **caractérisé en ce que** la zone sandwich (14) est hétérogène et comprend :
un plateau (15) qui rejoint via un nombre prédéterminé de rampes (16) un nombre prédéfini d'interstices dénués de noyau composite (17), dans lequel le plateau (15) et le nombre prédéfini d'interstices dénués de noyau composite (17) définissent une configuration non-uniforme (24) dans lequel le nombre prédéfini d'interstices dénués de noyau composite (17) comprend une première rigidité en flexion, et dans lequel le nombre prédéfini d'interstices dénués de noyau composite (17) comprend au moins un interstice intérieur (17a) qui est entièrement encadré par le noyau composite (6b), et
au moins une entretoise (20) qui est agencée de façon adjacente à au moins un interstice parmi les interstices dénués de noyau composite (17), dans lequel le plateau (15) forme la au moins une entretoise (20), cette au moins une entretoise (20) comprenant une seconde rigidité en flexion,
dans lequel la première rigidité en flexion est inférieure à la seconde rigidité en flexion.

2. Panneau sandwich composite (6) selon la revendication 1, **caractérisé en ce que** le premier panneau de peau (21a) et le second panneau de peau (21b) forment des zones monolithiques (18a, 18b) à l'intérieur du nombre prédéfini d'interstices dénués de noyau composite (17), le premier panneau de peau (21a) étant fixé au second panneau de peau (21b) à l'intérieur du nombre prédéfini d'interstices dénués de noyau composite (17).

3. Panneau sandwich composite (6) selon la revendication 2,
**caractérisé en ce que** le premier panneau de peau (21a) et le second panneau de peau (21b) forment un cadre monolithique de bordure (23) qui entoure la zone sandwich (14), le premier panneau de peau (21a) étant fixé au second panneau de peau (21b) à l'emplacement du cadre monolithique de bordure (23).

4. Panneau sandwich composite (6) selon la revendication 3,
**caractérisé en ce que** le cadre monolithique de bordure (23) forme une bordure de panneau externe (6a) du panneau sandwich composite (6) qui est apte à être fixé à des raidisseurs longitudinaux (12) et à des raidisseurs transversaux (13) associés.

5. Panneau sandwich composite (6) selon la revendication 1,
**caractérisé en ce que** la zone sandwich (14) couvre une portion du panneau sandwich composite (6) qui est délimitée par un périmètre externe (23a) avec un taux de recouvrement compris entre 40% et 65%.

6. Panneau sandwich composite (6) selon la revendication 1,
**caractérisé en ce que** le nombre prédéfini d'interstices dénués de noyau composite (17) comprend au moins un interstice (17) ayant une surface comprise entre 0,008 et 0,025 m².

7. Panneau sandwich composite (6) selon la revendication 1,
**caractérisé en ce que** le nombre prédéfini d'interstices dénués de noyau composite (17) et au moins une bordure de noyau externe (6g) de la zone sandwich (14) sont orientés et tracés indépendamment par rapport à un cadre monolithique de bordure (23) qui entoure la zone sandwich (14).

8. Panneau sandwich composite (6) selon la revendication 1,
**caractérisé en ce que** le plateau (15) présente une configuration continue (6e).

9. Panneau sandwich composite (6) selon la revendication 1,
**caractérisé en ce que** le plateau (15) présente une configuration discontinue (6f).

10. Panneau sandwich composite (6) selon la revendication 1,
**caractérisé en ce que** le plateau (15) présente une hauteur prédéterminée (15a).

11. Panneau sandwich composite (6) selon la revendication 10,
**caractérisé en ce que** la hauteur prédéterminée (15a) varie suivant une étendue spatiale du plateau (15).

12. Panneau sandwich composite (6) selon la revendication 1,
**caractérisé en ce que** la au moins une entretoise (20) est prévue avec une pluralité de nappes de renfort, en particulier des nappes unidirectionnelles de renfort, orientées suivant une direction d'extension de la au moins une entretoise (20).

13. Panneau sandwich composite (6) selon la revendication 1,
**caractérisé en ce que** la zone sandwich (14) comprend au moins une excroissance nodale d'angle (19) qui est aménagée dans un angle associé du panneau sandwich composite (6), la au moins une excroissance nodale d'angle (19) étant raccordée à ladite au moins une entretoise (20).

14. Aéronef à voilure tournante (1) avec un panneau sandwich composite (6) selon l'une quelconque des revendications précédentes.
